# EUROPÄISCHE PATENTSCHRIFT

(11) **EP 1 469 304 B1**
(45) Veröffentlichungstag und Bekanntmachung des Hinweises auf die Patenterteilung: **23.07.2008**
(21) Anmeldenummer: 04003736.8
(22) Anmeldetag: 19.02.2004
(51) Int. Cl.: G01N 23/203

(54) **Verfahren zum Betrieb eines röntgenoptischen Systems mit Wobbel-Einrichtung**
Method of using an x-ray optical system with wobbler device
Procédé d'utilisation d'un système optique à rayons X avec un dispositif d'oscillation

(30) Priorität: 17.04.2003 DE 10317679
(43) Veröffentlichungstag der Anmeldung: 20.10.2004
(73) Patentinhaber: Bruker AXS GmbH, 76187 Karlsruhe (DE)
(72) Erfinder: Helming, Kurt, 01257 Dresden (DE); Brügemann, Lutz, 76448 Durmersheim (DE)
(74) Vertreter: Kohler Schmid Möbus

(56) Entgegenhaltungen:
- GB-A- 1 036 658
- US-A- 5 684 857
- US-B1- 6 269 144

## Beschreibung

Die Erfindung betrifft ein Verfahren zum Betrieb eines Röntgen-optischen Systems mit einer Röntgen-Quelle, von der Röntgen-Strahlung auf eine zu untersuchende Probe geführt wird, und mit einem Röntgen-Detektor zum Empfang von an der Probe gebeugter oder gestreuter Strahlung, wobei zwischen der Quelle und der Probe und/oder zwischen der Probe und dem Detektor ein strahlführendes Röntgen-optisches Element, wie beispielsweise ein Kollimator, eine Mono- oder Polykapillare, ein Röntgen-Spiegel oder ein Monochromator angeordnet ist.

Röntgen-optische Systeme dieser Gattung sind in fast allen handelsüblichen Röntgendiffraktometern realisiert, beispielsweise im "ATX-G Optical system", The Rigaku Journal, Vol. 16, No. 1, 1999, Seiten 53-58.

Die US 6,269,144 B1 beschreibt eine Röntgendiffraktometer-Anlage mit scannender Röntgenquelle. Ein Röntgenstrahl, dessen Entstehungspunkt in der Röntgenquelle elektronisch verschiebbar ist, fällt auf eine Probe und wird mit mehreren Detektoren registriert. Zwischen der Probe und einem Detektor ist ein Kollimator angeordnet. Der Kollimator kann gegenüber der Probe bewegt werden, insbesondere um die Probe abzuscannen.

Zur Untersuchung der Materialeigenschaften von Proben unterschiedlichster Art werden Röntgenstrahlen eingesetzt. Diese können auf vielfältige Weise mit den Atomen der Probe wechselwirken, wobei ein Teil der einfallenden Strahlen in probenspezifische Raumrichtungen gestreut oder gebeugt werden kann, oder wobei die Probe ihrerseits zur Emission von Strahlung angeregt werden kann. Aus den Produkten der Wechselwirkung kann auf die Materialeigenschaften rückgeschlossen werden kann.

Röntgenstrahlung wird dabei üblicherweise als räumlich eng begrenzter Strahl auf die Probenoberfläche gerichtet. Der Strahldurchmesser begrenzt dabei den Probenbereich, aus dem Informationen gewonnen werden, und bestimmt das Auflösungsvermögen des Röntgen-optischen Systems insgesamt. Der Strahldurchmesser im Bereich der Probe beträgt bei typischen Röntgendiffraktometern zwischen 500 µm und 50 µm.

Untersuchungsobjekte, die Kristallite (einheitlich streuende Bereiche) mit einem Durchmesser größer gleich der Größenordnung des Strahldurchmessers aufweisen, erzeugen im 3-dimensionalen Winkelraum Beugungsmuster diskrete Intensitätsmaxima. Entsprechend große Kristallite können zum Beispiel beim abnormalen Kornwachstum in Metallen auftreten, oder auch gewünschte Produkte eines Herstellungsprozess sein. Bei vielen Methoden der Röntgenanalyse, etwa einem einfachen theta-2theta scan, können diese diskreten Intensitätsmaxima zur Verfälschung oder gar zum kompletten Ausfall von Beugungsreflexen infolge der zufälligen, ungleichmäßigen Orientierungsverteilung der wenigen bestrahlten Kristallite in der Probe führen. Diese als Korngrößeneffekt bezeichnete Erscheinung ist in der Regel unerwünscht. Vielmehr soll eine (lokal oder global) gemittelte Information über die Probe gewonnen werden.

Zur Behebung dieses Problems ist es im Stand der Technik bekannt, die Probe zu einem Pulver aufzumahlen und so die Kristallitgröße zu verringern. Dadurch wird aber das Untersuchungsobjekt zerstört.

Auch ist es bekannt, die Position des Untersuchungsobjektes während der Messung zu verändern, etwa mit einem XYZ-Positioniertisch. Dadurch wird eine integrale Information über einen größeren Probenbereich erwirkt. Diese Methode ist jedoch für viele Untersuchungsobjekte nicht anwendbar, da sie aufgrund von großer Masse oder hoher Beschleunigungsempfindlichkeit (etwa bei Flüssigkeiten) nicht oder nur sehr langsam bewegt werden können, und somit eine merkliche Vergrößerung des überstrichenen Probenbereichs in sinnvollen Messzeiträumen nicht erreicht werden kann.

Aufgabe der vorliegenden Erfindung ist es demgegenüber, ein Verfahren zum Betrieb eines Röntgen-optischen Systems vorzustellen, wobei auch bei grobkristallinen Untersuchungsobjekten bei einer Röntgenanalyse über die Materialprobe gemittelte Informationen zerstörungsfrei und ohne Beschleunigung des Untersuchungsobjektes gewonnen werden können.

Diese Aufgabe wird auf überraschend einfache, aber wirkungsvolle Weise durch ein Verfahren der eingangs vorgestellten Art dadurch gelöst, dass das Röntgen-optische Element mittels einer Wobbel-Einrichtung oszillierend bewegt wird, wobei die Oszillationsfrequenz der Wobbel-Einrichtung so gewählt ist, dass während einer Messung, während der der Detektor ein zeitlich integrales Messsignal detektiert, mindestens eine halbe, vorzugsweise ein ganzzahliges Vielfaches einer halben Oszillation ausgeführt wird.

Durch die oszillierende Bewegung des strahlführenden Röntgen-optischen Elements wird der informationsliefernde Bereich auf der Probe ebenfalls oszillierend verändert, d.h. auf der Probe bewegt. Der informationsliefernde Bereich kann durch den Strahlfleck des einfallenden Röntgenstrahls und/oder durch den Abtastbereich des Detektors begrenzt sein.

Durch die zeitliche Veränderung des informationsliefernden Bereichs auf der Probe wird effektiv eine Mittelung über den während einer Messung überstrichenen (d.h. ausgeleuchteten bzw. abgetasteten) Probenbereich erzielt. Ist das während einer Messung ausgeleuchtete Probenvolumen groß gegenüber dem Volumen eines Kristallits, so ist eine Verfälschung der Röntgenanalyse durch Korngrößeneffekte erfindungsgemäß weitgehend ausgeschlossen.

Besonders geeignet für eine Wobbeleinrichtung sind Röntgen-optische Elemente, die zumindest einenends eine gewisse Flexibilität aufweisen wie Glaskapillaren oder Polykapillaren. Das flexible Ende ist dann mit der Wobbel-Einrichtung verbunden und weist auf die Probe. Das andere Ende weist auf die Röntgenquelle oder den Detektor.

Erfindungsgemäß ist vorgesehen, dass die Oszillationsfrequenz der Wobbel-Einrichtung so gewählt ist, dass während einer Messung mindestens eine halbe, vorzugsweise ein ganzzahliges Vielfaches einer halben Oszillation ausgeführt wird. Dies bewirkt bei einer eindimensionalen Oszillation und Start an einem der beiden Randpunkte die vollständige Berücksichtigung des überstreichbaren Probenbereichs während einer Messung. Durch das ganzzahlige vielfachmalige Ausführen einer halben Oszillation wird jeder Abschnitt des überstrichenen Probenbereichs in etwa mit der gleichen Zeit in der Mittelung berücksichtigt, wobei von einer gleichmäßigen Oszillationsgeschwindigkeit während einer Oszillation ausgegangen wird.

Besonders bevorzugt ist die Oszillationsfrequenz so gewählt, dass während einer Messung genau eine Oszillation ausgeführt wird. In diesem Fall kann eine mechanisch schonende langsame Oszillationsfrequenz gewählt werden, ohne dass auf den phasenrichtigen Startpunkt einer eindimensionalen Oszillation geachtet werden muss.

Bei einer bevorzugten Variante des erfindungsgemäßen Verfahrens zum Betrieb eines Röntgen-optischen Systems ist vorgesehen, dass während der Messung, während der der Detektor ein zeitlich integrales Messsignal detektiert, die Röntgenquelle, die Probe und der Detektor in Ruhe bleiben.

Bei einer anderen, bevorzugten Verfahrensvariante bewirkt die Wobbel-Einrichtung mindestens zwei voneinander unabhängige Oszillationsbewegungen des Röntgen-optischen Elements. Dadurch kann der überstrichene Probenbereich erheblich vergrößert werden. Bevorzugt sind die beiden unabhängigen Oszillationsbewegungen zueinander im Wesentlichen orthogonal, betrachtet in der Auswirkung auf den überstrichenen Probenbereich.

Bei einer besonders bevorzugten Verfahrensvariante sind die Amplituden der Wobbel-Einrichtung so eingestellt, dass auf der Probe gewählte, vorgebbare Bereiche überstrichen werden. Die vorgebbaren Bereich können insbesondere Rechteckflächen oder Kreisflächen mit definierten Abmessungen sein. Dadurch kann die aus der Röntgenanalyse gewonnene Information definiert lokalen Probenbereichen zugeordnet werden.

Ganz besonders bevorzugt ist eine Verfahrensvariante, bei der sowohl quellenseitig als auch detektorseitig jeweils eine Wobbel-Einrichtung vorgesehen ist, deren Oszillationsbewegungen miteinander synchronisiert sind. Durch eine einseitige Oszillationsbewegung kann die Bragg-Bedingung verletzt werden, was zu einem Verlust an Intensität im Detektor führt. Durch synchronisiertes Oszillieren sowohl quellenseitig als auch detektorseitig kann die Bragg-Bedingung durch geeignetes Nachführen eines zweiten Röntgen-optischen Elements stets eingehalten werden, so dass besonders gute Signalzu-Untergrund-Verhältnisse erhältlich sind. Das synchronisierte Wobbeln ist außerdem notwendig, wenn der Strahlfleck des auf die Probe treffenden Röntgenstrahls und der Erfassungsbereich (Abtastbereich) des Detektors ungefähr gleich groß sind. In diesem Fall müssen Strahlfleck und Erfassungsfleck während der Oszillation streng in Deckung bleiben, um am Detektor Intensität zu erhalten. Sind hingegen Strahlfleck und Erfassungsfleck stark unterschiedlich groß, so genügt es erfindungsgemäß, den kleineren Fleck zu wobbeln.

Besonders bevorzugt ist eine Verfahrensvariante, welche vorsieht, dass die Wobbel-Einrichtung ein Piezo-Element umfasst. Ein Piezo-Element kann sehr schnell und exakt kleine Bewegungen elektrisch gesteuert ausführen.

Schließlich wird eine Verfahrensvariante bevorzugt, bei der die Amplitude der Wobbel-Einrichtung derart eingestellt ist, dass Winkeländerungen der auf die Probe auftreffenden bzw. der vom Detektor erfassten Röntgen-Strahlung weniger als 1°, vorzugsweise weniger oder ungefähr gleich 0,5° betragen. Bei einer solchen Winkelabweichung von der idealen Bragg-Position ist in aller Regel noch eine ausreichende Intensität von Röntgenstrahlung am Detektor zu erwarten. Bevorzugt beträgt die Winkeländerung durch die Wobbeleinrichtung maximal eine halbe Breite der vollen Halbwertsbreite FWHM (full width at half maximum) eines typischen Röntgenreflexes in einem mit dem Röntgen-optischen System wobbelfrei aufgenommenen Röntgenmuster.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: eine Röntgen-optischen System in Reflektionsgeometrie mit zwei Wobbeleinrichtungenzur Durchführung des erfindungsgemäßen Verfahrens;
- Fig. 2: eine Röntgen-optischen System in Transmissionsgeometrie mit zwei Wobbeleinrichtungenzur Durchführung des erfindungsgemäßen Verfahrens.

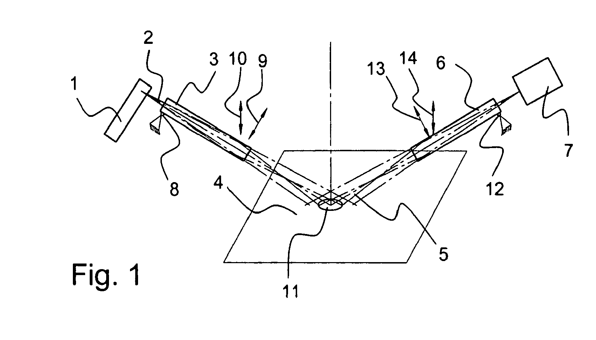

**Fig. 1** zeigt eine schematische Darstellung einer ersten Ausführungsform eines Röntgen-optischen Systems für das erfindungsgemäße Betriebsverfahren. Eine Röntgenquelle 1 emittiert einen divergenten Röntgenstahl 2. Dieser wird durch ein erstes Röntgen-optisches Element 3, hier eine Monokapillare, gebündelt und auf eine Probe 4 geführt. Der Röntgenstrahl 2 wechselwirkt mit der Probe 4, wobei ein ausgehender Röntgenstrahl 5 entsteht. Dieser wird in einem zweiten Röntgen-optischen Element 6, das ebenfalls als Monokapillare ausgebildet ist, gebündelt und auf einen Röntgendetektor 7 fokussiert. Röntgenquelle 1 und Röntgendetektor 7 sind auf einer Seite der näherungsweise, aber nicht zwingend ebenen Probe 4 angeordnet, so dass diese Ausführungsform zu Messungen in Reflektionsgeometrie geeignet ist.

Das erste Röntgen-optische Element 3 ist mit seinem der Röntgenquelle 1 zugewandten Ende an einem Kugelgelenk 8 gelagert. Das erste Röntgen-optische Element 3 kann mittels nicht eingezeichneter Piezoelementen in der Zeichenebene in Pfeilrichtung 9 oder auch senkrecht zur Zeichenebene in Pfeilrichtung 10 oszillierend verschwenkt ("gewobbelt") werden. Die Piezoelemente und das Kugelgelenk 8 sind damit die wesentlichen Teile einer Wobbeleinrichtung. Dadurch wird ein Strahlfleck 11 des einfallenden Röntgenstrahls 2 auf der Probe 4 bewegt. Dabei bleiben sowohl die Röntgenquelle 1 als auch die Probe 4 und der Detektor 7 in Ruhe. Durch die Bewegung des Strahlflecks 11 auf der Probe 4 wird ein größerer Teilbereich der Probe 4 in die Messung einbezogen und in einem zeitlich integrierten Messsignal des Detektors 7 berücksichtigt.

Das zweite Röntgen-optische Element 6 bildet vom Bereich des Strahlflecks 11 ausgehende Röntgenstrahlen 5 auf den Detektor 7 ab. Insofern sind in der gezeigten Abbildung Strahlfleck 11 und der Abtastbereich des Detektors 7 auf der Probe 4 deckungsgleich. Um während einer Oszillation des Strahlflecks 11 auf der Probe immer noch Nutzsignal im Detektor 7 zu erhalten, muss das zweite Röntgen-optische Element 6 in synchronisierter Weise zum ersten Röntgen-optischen Element 3 mitoszillieren. D.h. der Strahlfleck 11 und der Abtastbereich des Detektors 7 müssen in Deckung (Überlappung) gehalten werden. Dazu ist das zweite Röntgen-optische Element 6 am detektorseitigen Ende an ein Kugelgelenk 12 angelenkt. Zwei nicht dargestellte Piezoelemente erlauben eine Verschwenkung des zweiten Röntgen-optischen Elements 6 in grob vertikaler Richtung in der Zeichenebene in Pfeilrichtung 13 sowie in grob horizontaler Richtung senkrecht zur Zeichenebene in Pfeilrichtung 14.

Die Piezoelemente des ersten und des zweiten Röntgen-optischen Elements 3, 6 sind an eine elektronische Steuerung angeschlossen, die die Oszillationen der Röntgen-optischen Elemente 3, 6 untereinander und mit der Zeitdauer einer Einzelmessung abstimmt. Während einer Einzelmessung, d.h. während der Signalaufnahme am Detektor 7 während einer gleichbleibenden Proben-, Röntgenquellen- und Detektorstellung, führen die Röntgen-optischen Elemente 3, 6 in der gezeigten Ausführungsform genau eine vollständige Oszillation in jeder Pfeilrichtung 9, 10, 13, 14 aus.

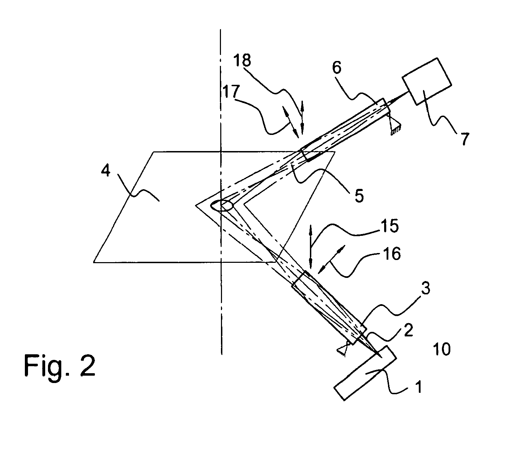

**Fig. 2** zeigt eine alternative Ausführungsform des Röntgen-optischen Systems für das erfindungsgemäße Betriebsverfahren. Bei dieser Ausführungsform sind eine Röntgenquelle 1 und ein Röntgendetektor 7 auf gegenüberliegenden Seiten einer näherungsweise, aber nicht zwingend ebenen Probe 4 angeordnet, so dass diese Ausführungsform für Messungen in Transmissionsgeometrie geeignet ist.

Im Übrigen entspricht diese Ausführungsform der Ausführungsform von Fig. 1. Ein auf die Probe 4 einfallender Röntgenstrahl 2 wird von einem ersten Röntgen-optischen Element 3 fokussiert. Ein durch Wechselwirkung mit der Probe 4 entstandener ausgehender Röntgenstrahl 5 wird von einem zweiten Röntgen-optischen Element 6 auf den Detektor 7 fokussiert. Das erste Röntgen-optische Element 3 kann zur Verschiebung eines Strahlflecks auf der Probe 4 in Pfeilrichtungen 15, 16 gewobbelt werden. Das zweite Röntgen-optische Element 6 kann zur Verschiebung des Abtastbereichs des Detektors 7 auf der Probe 4 in Pfeilrichtungen 17, 18 gewobbelt werden. Das Wobbeln ermöglicht die Vergrößerung des Informationen bereitstellenden Bereichs der Probe 4 während einer Einzelmessung.

## Patentansprüche

1. Verfahren zum Betrieb eines Röntgen-optisches Systems mit einer Röntgen-Quelle (1), von der Röntgen-Strahlung (2) auf eine zu untersuchende Probe (4) geführt wird, und mit einem Röntgen-Detektor (7) zum Empfang von an der Probe (4) gebeugter oder gestreuter Strahlung (5), wobei zwischen der Quelle (1) und der Probe (4) und/oder zwischen der Probe (4) und dem Detektor (7) ein strahlführendes Röntgen-optisches Element (3, 6), wie beispielsweise ein Kollimator, eine Mono- oder Polykapillare, ein Röntgen-Spiegel oder ein Monochromator angeordnet ist,
**dadurch gekennzeichnet,**
**dass** das Röntgen-optische Element (3, 6) mittels einer Wobbel-Einrichtung oszillierend bewegt wird,
wobei die Oszillationsfrequenz der Wobbel-Einrichtung so gewählt ist, dass während einer Messung, während der der Detektor (7) ein zeitlich integriertes Messsignal detektiert, mindestens eine halbe, vorzugsweise ein ganzzahliges Vielfaches einer halben Oszillation ausgeführt wird.

2. Verfahren nach Anspruch 1, **dadurch gekennzeichnet, dass** während der Messung, während der der Detektor (7) ein zeitlich integriertes Messignal detektiert, die Röntgenquelle (1), die Probe (4) und der Detektor (7) in Ruhe bleiben.

3. Verfahren nach einem der vorhergehenden Ansprüche, **dadurch gekennzeichnet, dass** die Wobbel-Einrichtung mindestens zwei voneinander unabhängige Oszillationsbewegungen (9, 10, 13, 14; 15, 16, 17, 18) des Röntgen-optischen Elements (3, 6) bewirkt.

4. Verfahren nach einem der vorhergehenden Ansprüche, **dadurch gekennzeichnet, dass** die Amplituden der Wobbel-Einrichtung so eingestellt sind, dass auf der Probe (4) gewählte, vorgebbare Bereiche überstrichen werden.

5. Verfahren nach einem der vorhergehenden Ansprüche, **dadurch gekennzeichnet, dass** sowohl quellenseitig als auch detektorseitig jeweils eine Wobbel-Einrichtung vorgesehen ist, deren Oszillationsbewegungen (9, 10, 13, 14; 15, 16, 17, 18) miteinander synchronisiert sind.

6. Verfahren nach einem der vorhergehenden Ansprüche, **dadurch gekennzeichnet, dass** die Wobbel-Einrichtung einen motorisierten Antrieb und/oder ein Piezo-Element umfasst.

7. Verfahren nach einem der vorhergehenden Ansprüche, **dadurch gekennzeichnet, dass** die Amplitude der Wobbel-Einrichtung derart eingestellt ist, dass Winkeländerungen der auf die Probe (4) auftreffenden bzw. der vom Detektor (7) erfassten Röntgen-Strahlung (2, 5) weniger als 1°, vorzugsweise weniger oder ungefähr gleich 0,5° betragen.

## Claims

1. Method for operating an X-ray optical system comprising an X-ray source (1) from which X-ray radiation (2) is guided to a sample (4) to be investigated, and an X-ray detector (7) for receiving radiation (5) that is diffracted or scattered by the sample (4), wherein a beam-guiding X-ray optical element (3, 6), e.g. a collimator, a mono- or polycapillary, an X-ray mirror or a monochromator, is disposed between the source (1) and the sample (4) and/or between the sample (4) and the detector (7), **characterized in that** the X-ray optical element (3, 6) is moved in an oscillating fashion using a wobble means, wherein the oscillation frequency of the wobble means is selected in such a fashion that during a measurement, during which the detector (7) detects a time-integrated measuring signal, at least half an oscillation, preferably an integer multiple of half an oscillation is performed.

2. Method according to claim 1, **characterized in that** during the measurement, during which the detector (7) detects a time-integrated measuring signal, the X-ray source (1), the sample (4) and the detector (7) remain at rest.

3. Method according to any one of the preceding claims, **characterized in that** the wobble means effects at least two independent oscillation motions (9, 10, 13, 14; 15, 16, 17, 18) of the X-ray optical element (3, 6).

4. Method according to any one of the preceding claims, **characterized in that** the amplitudes of the wobble means are adjusted in such a fashion that selected areas on the sample (4), which can be predetermined, are swept.

5. Method according to any one of the preceding claims, **characterized in that** one wobble means is provided each on the source side and also on the detector side, whose oscillation motions (9, 10, 13, 14; 15, 16, 17, 18) are synchronized.

6. Method according to any one of the preceding claims, **characterized in that** the wobble means comprises a motorized drive and/or a piezo element.

7. Method according to any one of the preceding claims, **characterized in that** the amplitude of the wobble means is adjusted in such a fashion that the angle of the X-ray radiation (2, 5) that is incident on the sample (4) or detected by the detector (7) changes by less than 1°, preferably less than 0.5°, or approximately by 0.5°.

## Revendications

1. Procédé d'utilisation d'un système optique à rayons X avec une source de rayons X (1) depuis laquelle un rayonnement X (2) est guidé vers un échantillon (4) à examiner, et avec un détecteur de rayons X (7) destiné à recevoir un rayonnement diffracté ou dispersé sur l'échantillon (4), un élément optique à rayons X (3, 6) conducteur de faisceau, comme par exemple un collimateur, un mono- ou polycapillaire, un miroir à rayons X ou un monochromateur, étant disposé entre la source (1) et l'échantillon (4) et/ou entre l'échantillon (4) et le détecteur (7),
**caractérisé en ce**
**que** l'élément optique à rayons X (3, 6) est déplacé de manière oscillante au moyen d'un dispositif d'oscillation,
la fréquence d'oscillation du dispositif d'oscillation étant choisie de façon que pendant une mesure au cours de laquelle le détecteur (7) détecte un signal de mesure intégré dans le temps, au moins une demi-oscillation, de préférence un multiple entier d'une demi-oscillation, est effectué(e).

2. Procédé selon la revendication 1, **caractérisé en ce que** pendant la mesure au cours de laquelle le détecteur (7) détecte un signal de mesure intégré dans le temps, la source de rayons X (1), l'échantillon (4) et le détecteur (7) restent au repos.

3. Procédé selon l'une des revendications précédentes, **caractérisé en ce que** le dispositif d'oscillation provoque au moins deux mouvements d'oscillation (9, 10, 13, 14 ; 15, 16, 17, 18) indépendants l'un de l'autre de l'élément optique à rayons X (3, 6).

4. Procédé selon l'une des revendications précédentes, **caractérisé en ce que** les amplitudes du dispositif d'oscillation sont réglées de façon que des zones choisies prescriptibles sont balayées sur l'échantillon (4).

5. Procédé selon l'une des revendications précédentes, **caractérisé en ce qu'**il est prévu aussi bien du côté source que du côté détecteur un dispositif d'oscillation respectif dont les mouvements d'oscillation (9, 10, 13, 14 ; 15, 16, 17, 18) sont synchronisés entre eux.

6. Procédé selon l'une des revendications précédentes, **caractérisé en ce que** le dispositif d'oscillation comprend un entraînement motorisé et/ou un élément piézoélectrique.

7. Procédé selon l'une des revendications précédentes, **caractérisé en ce que** l'amplitude du dispositif d'oscillation est réglée de façon que les variations angulaires du rayonnement X (2, 5) atteignant l'échantillon (4) et/ou saisi par le détecteur (7) soient inférieures à 1°, de préférence inférieures ou approximativement égales à 0,5°.
